# EUROPEAN PATENT APPLICATION

(11) **EP 4 411 607 A1**
(43) Date of publication of application: **07.08.2024**
(21) Application number: 24155325.4
(22) Date of filing: 01.02.2024
(51) Int. Cl.: G06Q 10/02, G06Q 50/14

(54) **SYSTEM AND METHOD FOR QUOTING AND BOOKING AIRCRAFT SERVICES**

(30) Priority: 01.02.2023 US 202318104615
(71) Applicant: Flexjet, LLC, Cleveland, OH 44143 (US)
(72) Inventor: CAMPOBASSO, Michael, Port Orange, FL (US); NAGALLA, Durga Prasad, Wayland, MA (US); COLLINS, Andrew, Needham, MA (US)
(74) Representative: Elkington and Fife LLP

(57) **Abstract**

A method for quoting and booking aircraft services via text messaging includes receiving an initial message from a mobile device; authenticating the user based on the mobile device, the authentication resulting in identification of a user record corresponding to the user; receiving a plurality of booking messages; extracting booking data selected from the group consisting of departure airport information, arrival airport information, departure date information, departure time information, passenger count information, and combinations thereof; generating one or more quotes; transmitting a quote message including the one or more quotes; receiving a quote choice message corresponding to a selected one of the one or more quotes; booking aircraft services corresponding to the booking data and the selected one of the one or more quotes, the booking resulting in a booking record having a booking record identifier; transmitting the booking record identifier.

## Description

### BACKGROUND

### Technical Field

The present invention relates to quoting and booking aircraft services, and more particularly to quoting and booking aircraft services via text messaging.

### Background

Private air travel, other than owning an aircraft, has conventionally been provided in three different ways. An individual (such as an individual person, business, organization or association) may purchase part of, or a fraction of, an aircraft and share the aircraft's use with others. An individual may also hire or rent an aircraft through a charter company. Alternatively, an individual may purchase a membership with an on-demand aircraft service. Each of these situations involves its own cost considerations and use restrictions, and it is often complicated and cumbersome to not only receive quotes for and book the best option for private aircraft services for a specific route, but also to select and adjust various parameters associated with that booking. In addition, until now quoting and booking aircraft services primarily have been performed by talking to an agent over the phone, by using websites, or by using dedicated smartphone apps, which a user has to download and install before being able to book aircraft services.

### SUMMARY

The deficiencies of the prior art are overcome by providing a method for quoting and booking aircraft services via a text messaging application of a mobile device associated with a user. In accordance with one embodiment of the present invention, the computerized method includes receiving, by a server system, an initial message from the text messaging application of the mobile device. The method also includes authenticating, by the server system upon receipt of the initial message, the user based on the mobile device, the authentication resulting in identification of a user record corresponding to the user. The method further includes receiving, by the server system from the mobile device via the text messaging application, a plurality of booking messages. The method includes extracting, by the server system from the initial message and the booking messages, booking data selected from the group consisting of departure airport information, arrival airport information, departure date information, departure time information, passenger count information, and combinations thereof. The method also includes generating, by the server system and based on the booking data and the user record, one or more quotes. The method further includes transmitting, by the server system to the mobile device via the text messaging application, a quote message including the one or more quotes. The method additionally includes receiving, by the server system from the mobile device via the text messaging application, a quote choice message, wherein the quote choice message corresponds to a selected one of the one or more quotes. The method also includes, upon receipt of a booking confirmation message from the mobile device via the text messaging application, booking, by the server system, aircraft services corresponding to the booking data and the selected one of the one or more quotes, the booking resulting in a booking record having a booking record identifier. The method includes transmitting, by the server system to the mobile device via the text messaging application, the booking record identifier.

Alternatively or in addition, the user record includes at least one of a booking history and booking preferences.

Also alternatively or in addition, the method further includes identifying, by the server system, one or more departure airport options based on at least one of the booking history, the booking preferences, and a location of the mobile device. The method also may include transmitting, from the server system to the mobile device via the text messaging application, a departure airport message, the departure airport message including the one or more departure airport options.

Alternatively or in addition, the method further includes identifying, by the server system, one or more arrival airport options based on at least one of the booking history and the booking preferences. The method may also include transmitting, from the server system to the mobile device via the text messaging application, an arrival airport message, the arrival airport message including the one or more arrival airport options.

Further alternatively or in addition, the method also includes identifying, by the server system, one or more departure time options based on at least one of the booking history, the booking preferences, and a current time. The method may also include transmitting, from the server system to the mobile device via the text messaging application, a departure time message, the departure time message including the one or more departure time options.

Alternatively or in addition, the method further includes identifying, by the server system, one or more arrival time options based on at least one of the booking history, the booking preferences, and a current time. The method may also include transmitting, from the server system to the mobile device via the text messaging application, an arrival time message, the arrival time message including the one or more arrival time options.

Also alternatively or in addition, the method further includes identifying, by the server system, one or more passenger count options based on at least one of the booking history and the booking preferences. The method may also include transmitting, from the server system to the mobile device via the text messaging application, a passenger count message, the passenger count message including the one or more passenger count options.

Further alternatively or in addition, the method further includes receiving, by the server system from the mobile device via the text messaging application, one or more booking detail messages. The method may also include extracting, by the server system from the one or more booking detail messages, booking detail data selected from the group of passenger name information, pet name information, catering information, ground transport information, passport information, special notes information, and combinations thereof. The method may further includes updating, by the server system, the booking record based on the booking detail data.

Alternatively or in addition, the method further includes identifying, by the server system, one or more ground transportation options based on at least one of the booking history, the booking preferences, the departure airport information, the arrival airport information, a location of the mobile device, and a current time. The method may also include transmitting, from the server system to the mobile device via the text messaging application, a ground transportation message, the ground transportation message including the one or more ground transportation options.

Alternatively or in addition, the method further includes identifying, by the server system, one or more catering options based on at least one of the booking history, the booking preferences, the departure airport information, the arrival airport information, a location of the mobile device, and a current time. The method may also include transmitting, from the server system to the mobile device via the text messaging application, a catering message, the catering message including the one or more catering options.

Also alternatively or in addition, generating the one or more quotes is further based on subscription information associated with the user record.

Alternatively or in addition, the method further includes identifying, by the server system, a preferred quote from the one or more quotes, wherein the preferred quote is based on data selected from the group consisting of the departure airport information, the arrival airport information, the passenger count information, pricing information of the one or more quotes, and combinations thereof. The quote message may further include an indication of the preferred quote.

Alternatively or in addition, generating the one or more quotes is further based on temporary flight restrictions.

Also alternatively or in addition, the method further includes generating, by the server system, an alternate route option having at least one of different departure airport information, different arrival airport information, different departure date information, and different departure time information. The method may also include transmitting, by the server system to the mobile device via the text messaging application, an alternate route message including the alternate route option.

Alternatively or in addition, the alternate route option is based on data selected from the group consisting of traffic patterns, airspace flow programs, temporary flight restrictions, and combinations thereof.

Also alternatively or in addition, authenticating the user further includes receiving, by the server system, identification indicia associated with the initial message and associated with the user. Authenticating the user also includes transmitting, by the server system to an authentication server, the identification indicia. Authenticating includes receiving, by the server system from the authentication server, a trust score. Authenticating also includes transmitting, by the server system to the mobile device via the text messaging application, an authentication message based on the trust score being lower than a threshold, wherein the authentication message includes a prompt for the user to perform an additional authentication step. Authenticating further includes receiving, by the server system from the authentication server, an authentication result based on at least one of the trust score and an outcome of the additional authentication step. The user is authenticated by the server system based on the authentication result.

In accordance with another embodiment of the present invention, a computerized method for updating a booking record via a text messaging application of a mobile device associated with a user includes receiving, by a server system, an initial message from the text messaging application of the mobile device. The method includes authenticating, by the server system upon receipt of the initial message, the user based on mobile device, the authentication resulting in identification of a user record corresponding to the user. The method also includes receiving, by the server system from the mobile device via the text messaging application, a booking record message including a booking record identifier. The method further includes retrieving, by the server system, a booking record corresponding to the booking record identifier. The method includes receiving, by the server system from the mobile device via the text messaging application, one or more booking detail messages. The method further includes extracting, by the server system from the one or more booking detail messages, booking detail data selected from the group of passenger name information, pet name information, catering information, ground transport information, passport information, special notes information, contact information, and combinations thereof. The method also includes updating, by the server system, the booking record based on the booking detail data. The method includes storing, by the server system, the updated booking record.

Alternatively or in addition, the user record includes at least one of a booking history and booking preferences. The booking record may also include departure airport information and arrival airport information.

Alternatively or in addition, the method further includes identifying, by the server system, one or more ground transportation options based on at least one of the booking history, the booking preferences, the departure airport information, the arrival airport information, a location of the mobile device, and a current time. The method may also includes transmitting, from the server system to the mobile device via the text messaging application, a ground transportation message, the ground transportation message including the one or more ground transportation options

Alternatively or in addition, authenticating the user further includes receiving, by the server system, identification indicia associated with the initial message and associated with the user. Authentication also includes transmitting, by the server system to an authentication server, the identification indicia. Authenticating includes receiving, by the server system from the authentication server, a trust score. Authenticating further includes transmitting, by the server system to the mobile device via the text messaging application, an authentication message based on the trust score being lower than a threshold, wherein the authentication message includes a prompt for the user to perform an additional authentication step. Authenticating includes receiving, by the server system from the authentication server, an authentication result based on at least one of the trust score and an outcome of the additional authentication step. The user is authenticated by the server system based on the authentication result.

In accordance with yet another embodiment of the present invention, a system for quoting and booking aircraft services includes a mobile device coupled to a network and associated with a user, the mobile device configured to run a text messaging application. The system further includes a server system coupled to the network and having a processor coupled to a memory. The processor is configured to receive, from the text messaging application of the mobile device and over the network, an initial message. The processor is also configured to, upon receipt of the initial message, authenticate the user based on the mobile device, the authentication resulting in identification of a user record corresponding to the user. The processor is further configured to receive, from the mobile device via the text messaging application and over the network, a plurality of booking messages. The processor is configured to extract, from the initial message and the booking messages, booking data selected from the group consisting of departure airport information, arrival airport information, departure date information, departure time information, passenger count information, and combinations thereof. The processor is also configured to generate, based on the booking data and the user record, one or more quotes. The processor is configured to transmit, to the mobile device via the text messaging application and over the network, a quote message including the one or more quotes. The processor is also configured to receive, from the mobile device via the text messaging application and over the network, a quote choice message, wherein the quote choice message corresponds to a selected one of the one or more quotes. The processor is configured to, upon receipt of a booking confirmation message from the mobile device via the text messaging application and over the network, book aircraft services corresponding to the booking data and the selected one of the one or more quotes, the booking resulting in a booking record having a booking record identifier. The processor is also configured to transmit, to the mobile device via the text messaging application and over the network, the booking record identifier.

### BRIEF DESCRIPTION OF THE DRAWINGS

The description below refers to the accompanying drawings, of which:
Fig. 1 is an illustration of a system for quoting and booking aircraft services in accordance with an embodiment of the present invention;
Fig. 2 is a flowchart of a method for quoting and booking aircraft services in accordance with an embodiment of the present invention;
Fig. 3 is a flowchart of a method for updating a booking record in accordance with an embodiment of the present invention; and
Figs. 4A, 4B, 4C, 4D, and 4E are screenshots of an exemplary text messaging application of a mobile device interacting with a system for quoting and booking aircraft services in accordance with an embodiment of the present invention.

### DETAILED DESCRIPTION OF ILLUSTRATIVE EMBODIMENTS

Fig, 1 is an illustration of a system 100 for quoting and booking aircraft services in accordance with an embodiment of the present invention. A mobile device 102 is coupled to a network 110. The mobile device 102 may be a cellphone or smartphone of the user, it may be a tablet, or it may be any other mobile device that can be communicatively coupled to the network 110. The mobile device 102 may also be a computer such as a laptop or a desktop. The mobile device 102 may be coupled to the network 110 by any way known to a skilled person, such as, but not limited to, Wi-Fi, a cellular network, Ethernet, Bluetooth, etc. The mobile device 102 is associated with a user. The association between the user and the mobile device 102 may be established in any way known to a skilled person. For example, the association may be established through a phone number, a Subscriber Identification Module (SIM) card, a username, and/or others. The mobile device 102 further includes a text messaging application 112 that allows the user to send and receive text messages over the network 110. To this end, the text messaging application 112 may use a text messaging service as provided by a cellular network, such as the Short Message Service (SMS) or the Multimedia Message Service (MMS). The text messaging application may also use a text messaging service from a provider other than the cellular or network provider. Examples for such a text messaging service are iMessage (Apple Inc, Cupertino, CA), WhatsApp (Meta Platforms Inc, Menlo Park, CA), Facebook Messenger (Meta Platforms Inc., Menlo Park, CA), and any other text messaging service known to the skilled person.

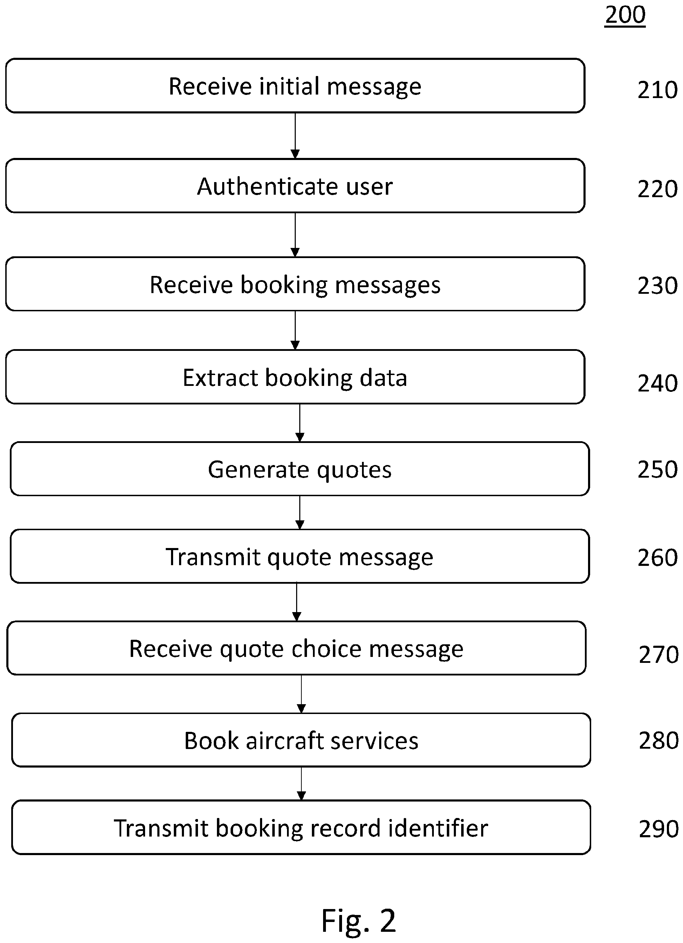

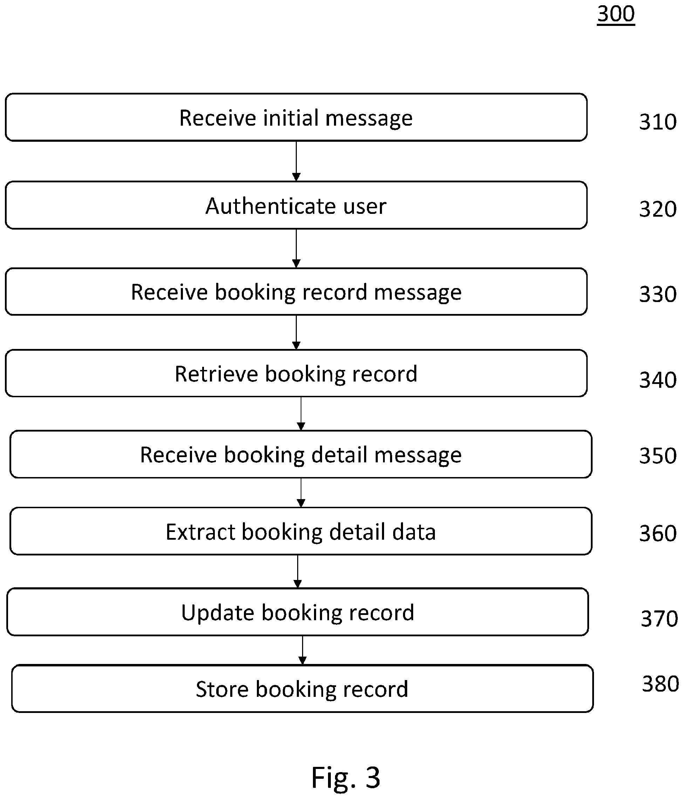

The network 110 may be the internet, or it may be any other public or private network. It is also expressly contemplated that the network 110 is a combination of networks, such as a combination of the internet, the private network of a cellular provider, and the private network of an aircraft services provider. Also coupled to the network 110 is a server system 104. Like the mobile device 102, the server system 104 may be coupled to the network 110 by any way known to a skilled person. The server system 104 includes a processor 106 coupled to memory 108. The processor 106 may be configured to execute the method described below in detail with reference to Fig. 2. Alternatively or in addition, the processor 106 may be configured to execute the method described below in detail with reference to Fig. 3. The server system 104 may include a single server, or it may include a plurality of servers and/or a combination of servers and other computing devices. The server system may also include a text messaging application (not shown) to interface with the text messaging service used by the text messaging application 112 on the mobile device 102.

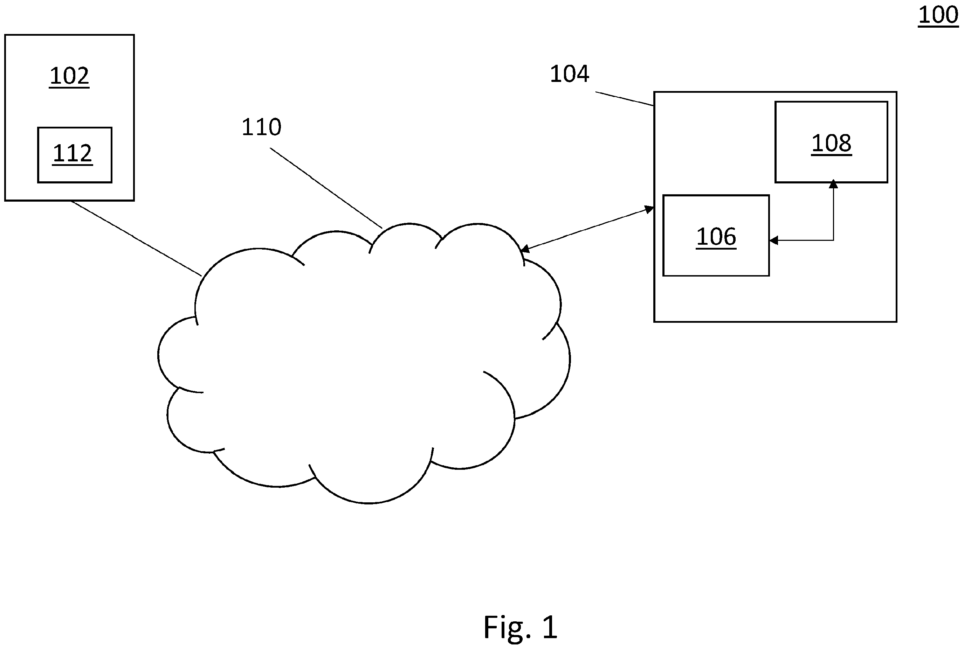

Fig. 2 is a flowchart of a method 200 for quoting and booking aircraft services in accordance with an embodiment of the present invention. The computerized method 200 may, for example, be executed by a processor 106 of a server system 104 as shown above in Fig. 1. The computerized method 200 is adapted to be executed without human intervention.

In step 210, the server system 104 receives an initial message from the text messaging application 112 on the mobile device 102. The initial message and all other messages exchanged between the server system 104 and the text messaging application 112 on the mobile device 102 conform to a message format associated with the text message application. In addition, whenever an exchange of a message between the server system and the mobile device is described herein, it is to be expressly understood that the exchange happens between the text messaging application on the mobile device and the server system, and/or between the text messaging application on the mobile device and a text messaging interface on the server system. The initial message is used to establish communication between the mobile device and the server system and may have any content. Illustratively, the initial message may include a greeting.

In step 220, the server system 104 authenticates the user based on the mobile device 102 that the user is associated with. The authentication may be performed according to any authentication method known in the art. Exemplarily, the authentication may be performed based on a phone number associated with the mobile device 102, based on a username and password, or based on any other identification indicia associated with the mobile device 102 and/or the user associated with the mobile device 102. The server system 104 may look up the identification indicia in a database, in its memory, or in another data store to determine whether the user of the mobile device is known to the server system 104. A user may be known to the server system, for example, because the user is a customer of an aircraft service associated with the server system. If the user is a customer, the authentication results in an identification of a user record corresponding to the user of the mobile device 102. Illustratively, the user record may include a booking history of the user. The booking history may include one or more previous booking records for the user. The user record may also include booking preferences for the user, such as a preferred departure airport, a preferred arrival airport, a default passenger count and passenger names, and so forth. Any information that relates to the booking of aircraft services by the user may be stored in the user record as part of the booking preferences.

In some embodiments, the authentication performed in step 220 may involve the use of an authentication service provided by an authentication server. The authentication server may be coupled to the network 110, allowing the server system 104 to communicate with the authentication server. The authentication server may also be part of the server system 104, or it may communicate with the server system 104 by other means than the network 110. Illustratively, the server system 104 receives identification indicia associated with the initial message and associated with the user. As stated above, examples for such identification indicia are a phone number, a username, an identification of the mobile device such as an IP address, and others. The server system may determine whether the identification indicia are associated with a user who is a customer of the aircraft service. If the user is a customer, the server system 104 then transmits the identification indicia to the authentication server. Following this transmission, the server system 104 receives from the authentication server a trust score. The meaning of the trust score depends on the service that the authentication server provides. Exemplarily, the trust score is a number in a predetermined range that is associated with how trustworthy a given combination of user and mobile device is. The trust score may be high if the same user has used the same mobile device before to access the aircraft service and/or the same user has been authenticated by another service using the same mobile device. The trust score may be low if the combination of user and mobile device is unknown to the authentication server, if the user previously failed to authenticate using the same mobile device, if a hardware identification of the mobile device has changed, etc. An example for an authentication service that provides a trust score is Prove (Prove Identity Inc., New York, NY). If the trust score is lower than a threshold determined by the provider of the aircraft service and/or the authentication provider, the server system 104 transmits an authentication message to the mobile device 102. The authentication message includes a prompt for the user to perform an additional authentication step. For example, the user may have to tap or click on a link included in the authentication message to be redirected to a web site where the user may, for example, enter a username and password. The authentication message may also include a prompt for the user to perform any other authentication steps known in the art. The server system 104 then receives from the authentication server an authentication result. The authentication result is based either on the trust score alone or on the trust score in combination with an outcome of the additional authentication step performed by the user. For example, the authentication result may be "pass" if the trust score is higher than or equal to the threshold. The authentication result may also be "pass" if the trust score is lower than the threshold and the user successfully performed the additional authentication step. The authentication result may be "fail" if the trust score is lower than the threshold and the user failed to successfully perform the additional authentication step. The server system 104 then authenticates the user based on the authentication result.

In step 230, the server system 104 receives from the mobile device 102 a plurality of booking messages. The booking messages may be part of an interactive conversation between the server system 104 and the user. The booking messages may also be sent by the user without interactive prompting by the server system. These booking messages relate to the booking of a specific trip using the aircraft service. The user provides details about the desired trip to the server system using these booking messages. For example, the user may provide information about the user's desired departure airport, desired arrival airport, desired departure date, desired departure time, desired arrival time, planned passenger count, and/or combinations thereof. It is expressly noted that the user may not provide all this information in the booking messages. Depending on the configuration of the server system 104, the server system may then send one or more additional message to the user to inquire about the missing information. It is also to be noted that, while a single departure airport and a single arrival airport is described herein, the booked route may include more than one leg and therefore may include more than one departure and/or more than one arrival airport. In that case, the server system 104 determines the information for the additional legs and generates quotes including the additional legs substantially in the same manner as for a route having a single leg. Alternatively or in addition, the server system 104 may collect data from the user indicating which options and/or preferences remain unchanged for the additional legs.

The additional message sent by the server system 104 may be a simple message asking for the missing information, such as: "Which airport would you like to depart from?" The server system may also identify options for the missing information that the user can then select from. For example, if the user has not provided departure airport information yet, the server system 104 may identify one or more departure airport options. These departure airport options may be identified based on the user's booking history and/or the user's booking preferences. For example, if a user has booked several flights departing from a certain airport, that airport may be added to the departure airport options. If the user's booking preferences indicate a preferred departure airport, that preferred airport may also be added to the departure airport options. The departure airport options may also be identified based on other information associated with the user and/or the mobile device. For example, the departure airport options may be identified based on a location of the mobile device. If the location of the mobile device is in Manhattan, New York, the server system 104 may illustratively add LaGuardia Airport and John F. Kennedy International Airport to the departure airport options. The departure airport options may also be based on departure airport information already provided by the user. For example, if the user provided departure airport information indicating that the departure airport should be "New York," the server system 104 may add various airports in and around New York, NY to the departure airport options. It is to be expressly understood that, whenever a departure or arrival airport is described herein, the airport may be public or a private airport. The airport may also be a private aviation terminal that is located on a public airport. The server system 104 then transmits a departure airport message to the mobile device. This departure airport message includes the one or more departure airport options identified by the server system. The user can then react to the departure airport message to provide the missing departure airport information to the server system.

Alternatively or in addition, the server system 104 may identify one or more arrival airport options. The arrival airport options may, again, be identified based on the user's booking history and/or the user's booking preferences. For example, if a user has booked several flights arriving at a certain airport, that airport may be added to the arrival airport options. If the user's booking preferences indicate a preferred arrival airport, that preferred airport may also be added to the arrival airport options. The arrival airport options may also be identified based on other data associated with the user. Illustratively, arrival airport options may be based on the user's home address and/or the location of the mobile device. If the user lives in Boston, but the location of the mobile device is not in or close to Boston, Logan International Airport may be identified as one of the arrival airport options. The arrival airport options may also be based on arrival airport information already provided by the user. For example, if the user provided arrival airport information indicating that the arrival airport should be "New York," the server system 104 may add various airports in and around New York, NY to the arrival airport options. The server system 104 then transmits an arrival airport message to the mobile device. This arrival airport message includes the one or more arrival airport options identified by the server system. The user can then react to the arrival airport message to provide the missing arrival airport information to the server system.

Alternatively or in addition, the server system 104 may identify one or more departure date and/or departure time options. The departure date and/or departure time options may, again, be identified based on the user's booking history and/or the user's booking preferences. For example, if a user has booked several flights departing at a certain time, that time may be added to the departure time options. If the user's booking preferences indicate a preferred departure time, that preferred departure time may also be added to the departure time options. Similarly, if the user's booking history and/or booking preferences indicate that the user usually departs or prefers to depart on a certain day of the week, an upcoming date corresponding to that day of the week may be added to the departure date options. The departure date and/or time options may also be identified based on other data associated with the user. Illustratively, departure date options and/or departure time options may be based on a current date and/or a current time at the location of the mobile device or at the departure airport. For example, the departure date options may include the current date if it is not too late in the day, and/or the departure date options may include the following day. In addition, the departure time options may include options different from specific times. Exemplarily, the departure time options may indicate options such as "morning," "evening," "afternoon," and so forth. The server system 104 then transmits a departure date message and/or a departure time message to the mobile device. The departure date message includes the one or more departure date options identified by the server system. The departure time message includes the one or more departure time options identified by the server system. The user can then react to the departure date and/or the departure time message to provide the missing departure date information and/or the missing departure time information to the server system.

Alternatively or in addition, the server system 104 may identify one or more arrival date and/or arrival time options. The arrival date and/or arrival time options may, again, be identified based on the user's booking history and/or the user's booking preferences. For example, if a user has booked several flights arriving at a certain time, that time may be added to the arrival time options. If the user's booking preferences indicate a preferred arrival time, that preferred arrival time may also be added to the arrival time options. Similarly, if the user's booking history and/or booking preferences indicate that the user usually arrives or prefers to arrive on a certain day of the week, an upcoming date corresponding to that day of the week may be added to the arrival date options. The arrival date and/or time options may also be identified based on other data associated with the user. Illustratively, arrival date options and/or arrival time options may be based on a current date and/or a current time at the location of the mobile device or at the arrival airport. For example, the arrival date options may include the current date if it is not too late in the day, and/or the arrival date options may include the following day. In addition, the arrival time options may include options different from specific times. Exemplarily, the arrival time options may indicate options such as "morning," "evening," "afternoon," and so forth. The server system 104 then transmits an arrival date message and/or an arrival time message to the mobile device. The arrival date message includes the one or more arrival date options identified by the server system. The arrival time message includes the one or more arrival time options identified by the server system. The user can then react to the arrival date message and/or the arrival time message to provide the missing arrival date information and/or the missing arrival time information to the server system.

Alternatively or in addition, the server system 104 may identify one or more passenger count options. The passenger count options may, again, be identified based on the user's booking history and/or the user's booking preferences. For example, if a user has booked several flights with a certain passenger count, that passenger count may be added to the passenger count options. If the user's booking preferences indicate a preferred passenger count, that preferred passenger count may also be added to the passenger count options. The passenger count options may also be identified based on other data associated with the user. Illustratively, passenger count options may be based on a previous flight. For example, the passenger count options may include the passenger count of a previous flight if the server system determines that the flight the user is about to book appears to be a return flight corresponding to a previous outbound flight. The server system 104 then transmits a passenger count message to the mobile device. This passenger count message includes the one or more passenger count options identified by the server system. The user can then react to the passenger count message to provide the missing passenger count information to the server system.

In addition to the booking messages, the server system 104 may also receive one or more booking detail messages from the mobile device 102. The booking detail messages may include information pertaining to passenger names, pet names, catering selections, ground transport selections, passenger passports, contact information, special notes, and/or combinations thereof. The booking detail messages may be sent by the user in response to corresponding prompts sent by the server system 104. The booking detail messages may also be sent by the user without having been prompted. The server system then extracts booking detail data from the one or more booking detail messages. The booking detail data may include information selected from the group of passenger name information, pet name information, catering information, ground transport information, passport information, contact information, special notes information, and combinations thereof. While the booking detail data here is extracted from the booking detail messages received by the server system, it is also expressly contemplated that the booking detail data may be obtained from other sources. For example, the booking detail data may be obtained from the user's booking history or the user's booking preferences. Certain booking detail data, such as passenger name information, passport information, and/or contact information may also be obtained from the user record. After extracting the booking detail data, the server system 104 may update the booking record based on the booking detail data. In other embodiments, the server system 104 may store the booking detail data to later add the booking detail data to the booking record when it has been created.

It is to be noted that not all booking detail data is required to be present in the booking record. For example, while the server system 104 may collect and save passenger name information, it is also expressly contemplated that the booking record includes only passenger count information, but no passenger name information, Similarly, the server system 104 may collect and store pet name information and special notes information, but it may also not store pet name information or special notes information in the booking record if no pet is booked for the trip (or the user does not provide its name) or if no special notes apply to the trip. The server system 104 may further collect and store the contact information to provide information about the trip to the user and the passengers, and/or to provide live updates during the trip.

Alternatively or in addition, the server system the server system 104 may identify one or more ground transportation options for the departure airport, the arrival airport, or both. The ground transportation options may be identified based on the user's booking history and/or the user's booking preferences. For example, if a user has booked several flights using certain ground transportation, that ground transportation may be added to the ground transportation options. If the user's booking preferences indicate a preferred ground transportation, that preferred ground transportation may also be added to the ground transportation options. The ground transportation options may also be identified based on other data associated with the user. Illustratively, ground transportation options may be based on the departure airport information, the arrival airport information, the current date, the current time, the user's home address and/or the location of the mobile device. For example, suitable ground transportation modes available at the departure airport and/or at the arrival airport may be added to the ground transportation options. In addition, the server system 104 may select the ground transportation options based on the current date and/or time, such as when certain options are not available at night or on weekends or if the user has indicated different preferences for different days of the week and/or times of the day. The server system 104 then transmits a ground transportation message to the mobile device. This ground transportation message includes the one or more ground transportation options identified by the server system. The user can then react to the ground transportation message to provide the missing ground transportation information to the server system.

Alternatively or in addition, the server system the server system 104 may identify one or more catering options for meals and/or drinks during the flight. The catering options may be identified based on the user's booking history and/or the user's booking preferences. For example, if a user has booked several flights ordering certain meals from a certain catering provider, those meals and/or the catering provider may be added to the catering options. If the user's booking preferences indicate a preferred meal or provider, that preferred meal and/or catering provider may also be added to the catering options. Further, if one or more passengers have dietary restrictions, the catering options may be identified based on these dietary restrictions. The catering options may also be identified based on other data associated with the user. Illustratively, catering options may be based on the departure airport information, the arrival airport information, the current date, the current time, and/or the location of the mobile device. For example, suitable catering providers available at the departure airport and/or at the arrival airport may be added to the catering options. In addition, the server system 104 may select the catering options based on the current date and/or time, such as when certain options are not available at night or on weekends or if the user has indicated different preferences for different days of the week and/or times of the day. The server system 104 then transmits a catering message to the mobile device. This ground transportation message includes the one or more catering options identified by the server system. The user can then react to the catering message to provide the missing catering information to the server system.

In step 240, the server system 104 extracts booking data from the initial message and the booking messages. While, as stated above, the initial message may only be a greeting, the initial message may also contain booking data. For example, the user may have sent an initial message stating: "Hello, I would like to book a trip from New York to Boston." In this case, the initial message includes departure airport information and arrival airport information. In other cases, the server system 104 extracts the information from the plurality of booking messages that are received from the mobile device 102 throughout the interaction between the server system and the user. The booking data includes departure airport information, arrival airport information, departure date information, departure time information, arrival date information, arrival time information, passenger count information, and combinations thereof. The booking data may also include additional information as collected by the aircraft service throughout the booking process and described below. The server system 104 may extract the booking data, and also the booking detail data, in any manner known to the skilled person. For example, the server system may extract the booking data and/or booking detail data using natural language processing (NPL). The NPL may illustratively be rule-based and/or statistics-based. Alternatively or in addition, the server system may extract the booking data and/or booking detail data using machine learning, such as by using a neural network. The neural network may include a language model or any other suitable model known in the art. The server system 104 may extract the booking data itself, or it may transmit data from the initial message, the booking messages, and/or the booking detail messages to another computer system that then performs the extraction. In that case, the server system 104 may receive the extracted data from the other computer system after the extraction has finished.

In step 250, the server system 104 generates one or more quotes based on the booking data extracted in the previous step 240. The quotes may be generated in any way known to the skilled person. For example, the quotes may be generated based on subscription information associated with the user record. The user's subscription, as indicated by the subscription information, may offer different options for aircraft (such as a private aircraft versus a shared aircraft), number of passengers, ground transportation and catering options, etc. The user's subscription may also offer different categories of products, such as fractional ownership of an aircraft, a jet card membership, or chartering an aircraft. The quotes may be generated based on one or more of these categories. For example, the quote may be generated based on the user's jet card membership which may correspond to certain types of aircraft that are guaranteed for travel at a certain cost. In other words, the jet card membership may be a subscription that allows a user to enjoy the convenience, practicality and ease that comes with private air travel without the hassle, maintenance, and high costs of owning a jet or a fraction of a jet.

In addition, the user's subscription may include different pricing options for the same or a similar trip. The user's subscription may be based on fixed pricing or dynamic pricing, or a combination thereof. The user's subscription may provide a fixed price for a certain route, or it may provide a dynamic price based on date, time, and other parameters. The one ore more quotes may include quotes with pricing options for dates surrounding the desired departure and/or arrival date. They may also include quotes for airports close to the desired departure and/or arrival date. In addition, the quotes may include options that are not included in the user's subscription. For example, if a different membership or subscription level would lead to cost optimization for a certain route, the one or more quotes may include a quote based on that different membership level together with a message prompting the user to modify his membership. In general, quotes are generated to substantially match the user's booking data and booking detail data, but the server system 104 may also include quotes that deviate from the user's choices in the interest of cost optimization. Also, illustratively, the quote generation may take into account the day and time of travel, the requested route, type of aircraft, private terminal chosen by the user, the number of passenger, the number of legs or stops, etc. Travel on a peak travel day may be more expensive than travel on other days, The aircraft service provider may not have a suitable aircraft at the requested departure airport and may have to reposition an aircraft to allow for the user's requested trip. In that case, the quote may include additional costs for repositioning. An airport that provides more than one private terminal may have different levels of terminals. The quotes may take into account of different prices for different terminals. The quotes may also take into account of the requested route, including the number of stops. A direct route from departure airport A to arrival airport C may be less expensive than a route that includes an additional stop at airport B.

Alternatively or in addition to generating quotes for one or more categories of products, the server system 104 may also suggest a specific category as the optimal category for a specific booking. For example, the server system 104 may suggest that the user book a charter flight as opposed to a requested jet card flight. The server system may suggest the category based on the distance of the trip, the number of passengers, prices for same trip in different product categories, and/or the type of the trip (such as vacation, business, or adventure). The server system 104 may also generate one or more quotes associated with the suggested category. The user then may accept the suggested category and an associated quote, or the user may ask the server system to generate one or more quotes for a different product category. In other embodiments, the server system 104 may suggest a product category strictly based on price. The server system 104 may, for example, determine that a charter aircraft would be less expensive than a jet card trip and suggest a charter flight based on this determination.

The server system 104 may, alternatively or in addition, determine the one or more quotes based on temporary flight restrictions. The server system may obtain information about temporary flight restrictions from the Federal Aviation Administration, a different national or regional aviation regulation agency, air traffic control, and/or from a third-party service provider. The server system may then create or adjust the one or more quotes based on the obtained information. For example, if the desired arrival airport is unavailable due to a temporary flight restriction in its vicinity, the one or more quotes may indicate a different arrival airport. In another example, a desired flight route from the departure to the arrival airport may be unavailable based on temporary flight restrictions. In that case, the one or more quotes may be adjusted by the server system to reflect a required detour.

In step 260, the server system 104 transmits a quote message to the mobile device. The quote message includes the one or more quotes generated in the previous step 250. The quote message may also include additional information pertaining to the one or more quotes, such as how and with which parameters the quotes were generated. The server system 104 may also indicate a preferred quote from the one or more quotes. The preferred quote may be determined based on the departure airport information, the arrival airport information, the passenger count information, pricing information of the one or more quotes, and combinations thereof. For example, the preferred quote may be the least expensive quote, or it may be the quote that most closely matches the user's desired departure and/or arrival airport, the user's desired departure and/or arrival time, the user's subscription data, and combinations thereof. The preferred quote may also be determined based on any other factors as known in the art. The server system 104 may include an indication of the preferred quote in the quote message.

Additionally, the server system 104 may determine one or more upgrade offers for the user. Such upgrade offers may include upgrades for the aircraft type, ground transportation, catering, airport terminal, ground services, and other parameters of the requested trip. If the server system 104 determines that one or more upgrade offers are available, the server system 104 includes the upgrade offers in the quote message. For example, in addition to a certain first quote, the quote message may also include a second quote that has the same parameters as the first quote but includes an upgraded aircraft type. How the server system 104 may determine upgrade offers is described in detail in U.S. Provisional Patent Application No. 63/300,523 entitled "Transportation Decision Interface Engine" and filed on January 18, 2022, which is hereby incorporated herein in its entirety.

As described above, depending on the booking data, the user record, any flight restrictions, or any other information, the server system may also generate one or more alternate route options. An alternate route option has at least one of a different departure airport, a different arrival airport, a different departure date, and a different departure time. The one or more alternate route options may be generated based on one or more of the user record, booking preferences, flight restrictions, current traffic patterns, airspace flow programs, price, and/or any other data available to the server system. The server system 104 may then transmit an alternate route message to the mobile device. The alternate route message includes the one or more alternate route options. The alternate route message may be transmitted before the quote message, or it may be transmitted after the quote message to indicate alternate routes with alternate, and possibly better, quotes. In some embodiments, the server system 104 generates the one or more alternate route options strictly based on the price for the different alternate routes as compared to the originally requested route.

In step 270, the server system 104 receives a quote choice message from the mobile device 102. The quote choice message corresponds to a quote of the one or more quotes that the user has selected to book. The quote choice message could correspond to any selected one of the one or more quotes. For example, the quote choice message could correspond to the least expensive quote, to the quote having the least aircraft changes, to the quote that has the most convenient departure time for the user, and so forth.

In step 280, the server system 104 books aircraft services corresponding to the booking data and the selected quote of the one or more quotes. In some embodiments, the server system 104 books the aircraft services after receiving the quote choice message. In other embodiments, the server system 104, after receiving the quote choice message, sends another message to the mobile device asking the user for confirmation of the booking. Upon receipt of a booking confirmation message that indicates that the user of the mobile device would like to confirm the booking, the server system 104 then books the aircraft services. The booking results in a booking record that has a booking record identifier. The server system 104 may book the aircraft services in any manner known in the art. The server system 104 may, for example, contact a booking server system over the network 110 to cause booking of the services. In that case, the server system receives the booking record from the booking server system. In other examples, the server system 104 books the services and generates the booking record itself.

In step 290, the server system 104 transmits the booking record identifier to the mobile device. In some embodiments, the server system 104 further transmits one or more suggestions messages to the mobile device. For example, the suggestions messages may contain information about suggested accommodations and suggested experiences close to the arrival airport. The server system 104 may generate this information based on the user's booking history and/or other historical information in the user record. For example, the user record may indicate that the user prefers to stay with a certain chain of hotels. In that case, the server system may generate a suggestions message suggesting a hotel belonging to this chain that is located close to the arrival airport. In other embodiments, the server system 104 may generate the suggestions based on partnerships of the aircraft service provider with accommodation providers or experience providers. For example, the aircraft service provider may have a partnership with a certain chain of hotels. The server system 104 may then suggest a stay in a hotel belonging to that chain. In another example, the aircraft service provider may have a partnership with a company that provides city tours in the city of the arrival airport. The server system 104 may then send a suggestions message to the user that suggests taking a city tour with that tour company.

Fig. 3 is a flowchart of a method 300 for updating a booking record in accordance with an embodiment of the present invention. The computerized method 300 may, for example, be executed by a processor 106 of a server system 104 as shown above in Fig. 1. In some embodiments, the computerized method 300 of FIG. 3 is executed after the computerized method of FIG. 2 (i.e., after a booking is completed) to collect more details related to the booking.

In step 310, the server system 104 receives an initial message from the text messaging application 112 on the mobile device 102. The initial message and all other messages exchanged between the server system 104 and the text messaging application 112 on the mobile device 102 conform to the message format associated with the text message application. In addition, whenever an exchange of a message between the server system and the mobile device is described herein, it is to be expressly understood that the exchange is between the text messaging application on the mobile device and the server system, and/or between the text messaging application on the mobile device and a text messaging interface on the server system. The initial message is used to establish communication between the mobile device and the server system and may have any content. Illustratively, the initial message may include a greeting.

In step 320, the server system 104 authenticates the user based on the mobile device 102 that the user is associated with. The authentication may be performed in substantially the same way as described above with reference to step 220 of the method shown in Fig. 2. The authentication results in the identification of a user record corresponding to the user. The user record may include a booking history of the user. The user record may also include booking preferences of the user.

In step 330, the server system 104 receives a booking record message from the mobile device 102. The booking record message includes a booking record identifier that corresponds to a specific and existing booking record.

In step 340, the server system 104 receives the booking record that corresponds to the booking record identifier. The booking record includes booking data that is associated with a specific aircraft service booked by the user. To this end, the booking record may include data such as departure airport information, arrival airport information, departure date/time information, arrival date/time information, aircraft information, and/or any other information described above with reference to Fig. 2. The booking record may be retrieved in any way known in the art. For example, the booking record may be retrieved over the network 110 from a booking server system. The booking record may also be retrieved from memory 108, from a database, or from a file system.

In step 350, the server system 104 receives from the mobile device 102 a plurality of booking detail messages. The booking messages may be part of an interactive conversation between the server system 104 and the user. The booking detail messages may also be sent by the user without interactive prompting by the server system. These booking detail messages relate to the specific trip associated with the booking record. The user provides additional details for the trip to the server system using these booking detail messages. For example, the user may provide information about the passengers' names, pet names, desired catering, desired ground transportation, the passengers' passports, special notes, contact information, and/or combinations thereof. It is expressly noted that the user may not provide all this information in the booking detail messages. Depending on the configuration of the server system 104, the server system may then send additional messages to the user to inquire about the missing information.

In step 360, server system 104 extracts booking detail data from the initial message and the booking detail messages. While, as stated above, the initial message may only be a greeting, the initial message may also contain booking detail data. For example, the user may have sent an initial message stating: "Hello, I would like to add my dog Rover to my booked trip KJ3B6L." In this case, the initial message includes pet name information for a specific booking record identified by the booking record identifier KJ3B6L. In other cases, the server system 104 extracts the information from the plurality of booking detail messages that are received from the mobile device 102 throughout the interaction between the server system and the user. The booking detail data includes passenger name information, pet name information, catering information, ground transport information, passport information, special notes information, contact information, and combinations thereof. The booking detail data may also include additional information as collected by the aircraft service throughout the booking process and described in detail above with reference to method 200.

It is also expressly contemplated that the server system 104 may identify options for one or more of the booking detail data as described in detail above with reference to method 200. For example, the server system the server system 104 may identify one or more ground transportation options. As described, the ground transportation options may be identified based on the user's booking history and/or the user's booking preferences. The ground transportation options may also be identified based on other data associated with the user. Illustratively and as described above, ground transportation options may be based on the departure airport information, the arrival airport information, the current date, the current time, the user's home address and/or the location of the mobile device.. The server system 104 then transmits a ground transportation message to the mobile device. This ground transportation message includes the one or more ground transportation options identified by the server system. The user can then react to the ground transportation message to provide missing or updated ground transportation information to the server system

In step 370, the server system 104 updates the booking record based on the booking detail data. In some cases, the server system adds additional information to the booking record that was not there before. In other cases, the server system replaces existing information in the booking record with the new booking detail data provided by the user.

In step 380, the server system 104 stores the updated booking record. The booking record may be stored in any way known in the art. For example, the updated booking record may be stored in a database, in memory 108, or it may be transmitted over the network 110 to a booking server system.

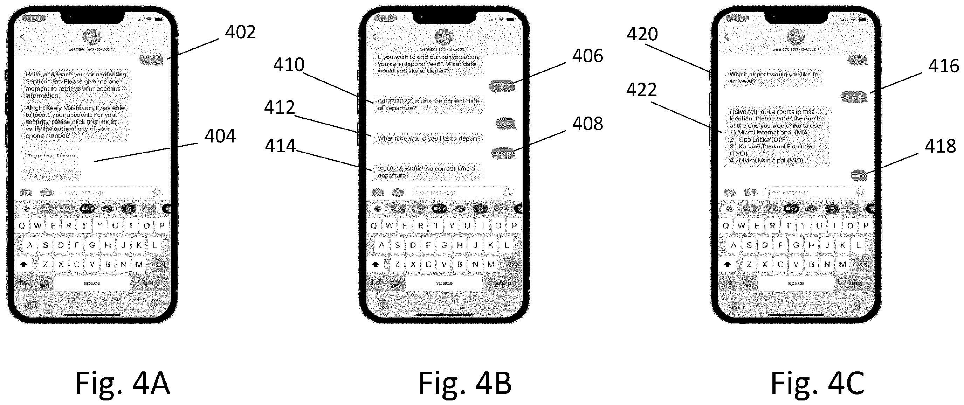

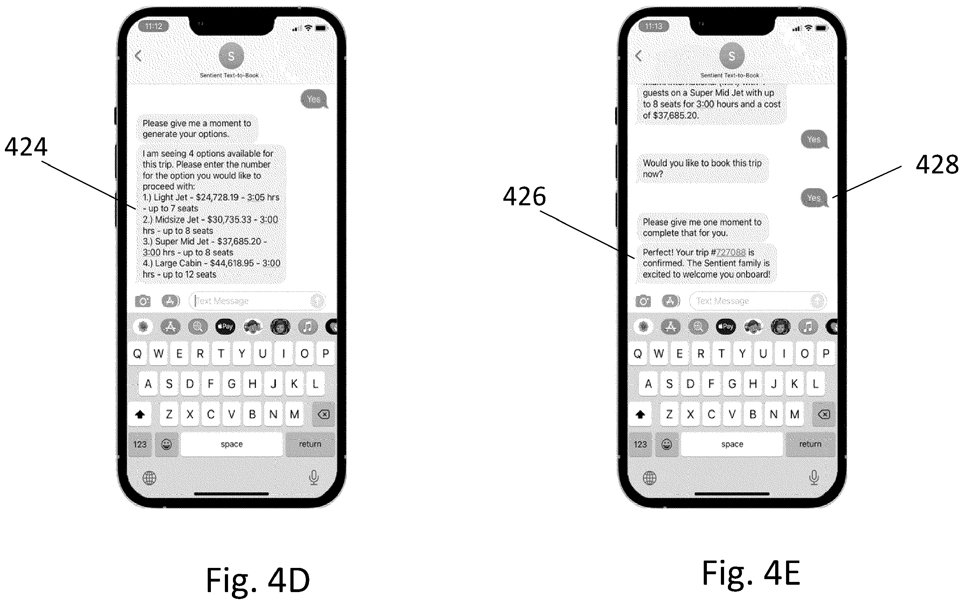

Figs. 4A, 4B, 4C, 4D, and 4E are screenshots of an exemplary text messaging application of a mobile device interacting with a system for quoting and booking aircraft services in accordance with an embodiment of the present invention. These screenshots show how a text messaging application on a mobile device may look at various steps of the method described above in detail with reference to Fig. 2. For example, Fig. 4A shows an initial message 402 sent by the user to the server system 104 which, in this case, is a greeting. Fig. 4A also shows an authentication message 404 that prompts the user to perform an additional authentication step. Fig. 4B shows a plurality of booking messages sent by the user to the server system, and a plurality of additional messages sent by the server system to the user to inquire about missing or unclear information. In response to booking message 406, the server system 104 may send additional message 410 to clarify the departure date. The server system 104 may also send additional message 412 to inquire about the desired departure time. In response to booking message 408, the server system 104 may then send another additional message 414 to clarify and confirm the departure time. Fig. 4C shows another example of booking messages and additional messages. The server system 104 may send additional message 420 to the user to inquire about the requested arrival airport. The user then sends booking message 416 to the server system. Because there are several airports in the vicinity of the city requested by the user in booking message 416, the server system 104 sends an additional message 422 that includes a plurality of options for the arrival airport. The user may select a desired arrival airport by responding with booking message 418.

Fig. 4D shows an example of a quote message 424 generated by the server system 104. As can be seen, the quote message 424 includes a plurality of quotes. In the example shown here, the quotes include different aircraft types that can carry different numbers of passengers. The user may then respond to the quote message 424 by selecting a certain type of aircraft. In this example, the user may response with a quote choice message "3" to select a Super Mid Jet.

Fig. 4E shows an example of a booking record identifier transmitted to the mobile device of the user as part of a booking. In this example, the user may have sent a booking confirmation message 428 to the server system 104. The server system 104 then books the requested aircraft services and sends a message 426 to the user that includes the booking record identifier. In the example shown here, the booking record identifier is 727088.

Embodiments of the present invention may be embodied in many different forms, including, but in no way limited to, computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof.

Computer program logic implementing all or part of the functionality previously described herein may be embodied in various forms, including, but in no way limited to, a source code form, a computer executable form, and various intermediate forms (e.g., forms generated by an assembler, compiler, networker, or locator.) Source code may include a series of computer program instructions implemented in any of various programming languages (e.g., an object code, an assembly language, or a high-level language such as Fortran, C, C++, JAVA, or HTML) for use with various operating systems or operating environments. The source code may define and use various data structures and communication messages. The source code may be in a computer executable form (e.g., via an interpreter), or the source code may be converted (e.g., via a translator, assembler, or compiler) into a computer executable form.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device. The computer program may be fixed in any form in a signal that is transmittable to a computer using any of various communication technologies, including, but in no way limited to, analog technologies, digital technologies, optical technologies, wireless technologies, networking technologies, and internetworking technologies. The computer program may be distributed in any form as a removable storage medium with accompanying printed or electronic documentation (e.g., shrink wrapped software or a magnetic tape), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

The foregoing description described certain example embodiments. It will be apparent, however, that other variations and modifications may be made to the described embodiments, with the attainment of some or all of their advantages. Accordingly, the foregoing description is to be taken only by way of example, and not to otherwise limit the scope of the disclosure. It is the object of the appended claims to cover all such variations and modifications as come within the true spirit and scope of the disclosure.

The following embodiments are disclosed:
1. A computerized method for quoting and booking aircraft services via a text messaging application of a mobile device associated with a user, the method comprising:
   receiving, by a server system, an initial message from the text messaging application of the mobile device;
   authenticating, by the server system upon receipt of the initial message, the user based on the mobile device, the authentication resulting in identification of a user record corresponding to the user;
   receiving, by the server system from the mobile device via the text messaging application, a plurality of booking messages;
   extracting, by the server system from the initial message and the booking messages, booking data selected from the group consisting of departure airport information, arrival airport information, departure date information, departure time information, passenger count information, and combinations thereof;
   generating, by the server system and based on the booking data and the user record, one or more quotes;
   transmitting, by the server system to the mobile device via the text messaging application, a quote message including the one or more quotes;
   receiving, by the server system from the mobile device via the text messaging application, a quote choice message, wherein the quote choice message corresponds to a selected one of the one or more quotes;
   upon receipt of a booking confirmation message from the mobile device via the text messaging application, booking, by the server system, aircraft services corresponding to the booking data and the selected one of the one or more quotes, the booking resulting in a booking record having a booking record identifier; and
   transmitting, by the server system to the mobile device via the text messaging application, the booking record identifier.
2. The method of embodiment 1, wherein the user record includes at least one of a booking history and booking preferences.
3. The method of embodiment 2, further comprising:
   identifying, by the server system, one or more departure airport options based on at least one of the booking history, the booking preferences, and a location of the mobile device;
   transmitting, from the server system to the mobile device via the text messaging application, a departure airport message, the departure airport message including the one or more departure airport options.
4. The method of embodiment 2 or embodiment 3, further comprising:
   identifying, by the server system, one or more arrival airport options based on at least one of the booking history and the booking preferences;
   transmitting, from the server system to the mobile device via the text messaging application, an arrival airport message, the arrival airport message including the one or more arrival airport options.
5. The method of any one of embodiments 2 to 4, further comprising:
   identifying, by the server system, one or more departure time options based on at least one of the booking history, the booking preferences, and a current time;
   transmitting, from the server system to the mobile device via the text messaging application, a departure time message, the departure time message including the one or more departure time options.
6. The method of any one of embodiments 2 to 5, further comprising:
   identifying, by the server system, one or more arrival time options based on at least one of the booking history, the booking preferences, and a current time;
   transmitting, from the server system to the mobile device via the text messaging application, an arrival time message, the arrival time message including the one or more arrival time options.
7. The method of any one of embodiments 2 to 6, further comprising:
   identifying, by the server system, one or more passenger count options based on at least one of the booking history and the booking preferences;
   transmitting, from the server system to the mobile device via the text messaging application, a passenger count message, the passenger count message including the one or more passenger count options.
8. The method of any one of embodiments 2 to 7, further comprising:
   receiving, by the server system from the mobile device via the text messaging application, one or more booking detail messages;
   extracting, by the server system from the one or more booking detail messages, booking detail data selected from the group of passenger name information, pet name information, catering information, ground transport information, passport information, special notes information, and combinations thereof;
   updating, by the server system, the booking record based on the booking detail data.
9. The method of embodiment 8, further comprising:
   identifying, by the server system, one or more ground transportation options based on at least one of the booking history, the booking preferences, the departure airport information, the arrival airport information, a location of the mobile device, and a current time;
   transmitting, from the server system to the mobile device via the text messaging application, a ground transportation message, the ground transportation message including the one or more ground transportation options.
10. The method of embodiment 8 or embodiment 9, further comprising:
   identifying, by the server system, one or more catering options based on at least one of the booking history, the booking preferences, the departure airport information, the arrival airport information, a location of the mobile device, and a current time;
   transmitting, from the server system to the mobile device via the text messaging application, a catering message, the catering message including the one or more catering options.
11. The method of any one of the preceding embodiments, wherein generating the one or more quotes is further based on subscription information associated with the user record.
12. The method of any one of the preceding embodiments, further comprising:
   identifying, by the server system, a preferred quote from the one or more quotes, wherein the preferred quote is based on data selected from the group consisting of the departure airport information, the arrival airport information, the passenger count information, pricing information of the one or more quotes, and combinations thereof,
   wherein the quote message further includes an indication of the preferred quote.
13. The method of any one of the preceding embodiments, wherein generating the one or more quotes is further based on temporary flight restrictions.
14. The method of any one of the preceding embodiments, further comprising:
   generating, by the server system, an alternate route option having at least one of different departure airport information, different arrival airport information, different departure date information, and different departure time information; and
   transmitting, by the server system to the mobile device via the text messaging application, an alternate route message including the alternate route option.
15. The method of embodiment 14, wherein the alternate route option is based on data selected from the group consisting of traffic patterns, airspace flow programs, temporary flight restrictions, and combinations thereof.
16. The method of any one of the preceding embodiments, wherein authenticating the user further comprises:
   receiving, by the server system, identification indicia associated with the initial message and associated with the user;
   transmitting, by the server system to an authentication server, the identification indicia;
   receiving, by the server system from the authentication server, a trust score;
   transmitting, by the server system to the mobile device via the text messaging application, an authentication message based on the trust score being lower than a threshold, wherein the authentication message includes a prompt for the user to perform an additional authentication step;
   receiving, by the server system from the authentication server, an authentication result based on at least one of the trust score and an outcome of the additional authentication step; and
   authenticating, by the server system, the user based on the authentication result.
17. A computerized method for updating a booking record via a text messaging application of a mobile device associated with a user, the method comprising:
   receiving, by a server system, an initial message from the text messaging application of the mobile device;
   authenticating, by the server system upon receipt of the initial message, the user based on mobile device, the authentication resulting in identification of a user record corresponding to the user;
   receiving, by the server system from the mobile device via the text messaging application, a booking record message including a booking record identifier;
   retrieving, by the server system, a booking record corresponding to the booking record identifier;
   receiving, by the server system from the mobile device via the text messaging application, one or more booking detail messages;
   extracting, by the server system from the one or more booking detail messages, booking detail data selected from the group of passenger name information, pet name information, catering information, ground transport information, passport information, special notes information, contact information, and combinations thereof;
   updating, by the server system, the booking record based on the booking detail data; and
   storing, by the server system, the updated booking record.
18. The method of embodiment 17, wherein the user record includes at least one of a booking history and booking preferences
19. The method of embodiment 17 or embodiment 18, wherein the booking record includes departure airport information and arrival airport information.
20. The method of embodiment 19, further comprising:
   identifying, by the server system, one or more ground transportation options based on at least one of the booking history, the booking preferences, the departure airport information, the arrival airport information, a location of the mobile device, and a current time;
   transmitting, from the server system to the mobile device via the text messaging application, a ground transportation message, the ground transportation message including the one or more ground transportation options.
21. The method of any one of embodiments 17 to 20, wherein authenticating the user further comprises:
   receiving, by the server system, identification indicia associated with the initial message and associated with the user;
   transmitting, by the server system to an authentication server, the identification indicia;
   receiving, by the server system from the authentication server, a trust score;
   transmitting, by the server system to the mobile device via the text messaging application, an authentication message based on the trust score being lower than a threshold, wherein the authentication message includes a prompt for the user to perform an additional authentication step;
   receiving, by the server system from the authentication server, an authentication result based on at least one of the trust score and an outcome of the additional authentication step; and
   authenticating, by the server system, the user based on the authentication result.
22. A system for quoting and booking aircraft services, the system comprising:
   a mobile device coupled to a network and associated with a user, the mobile device configured to run a text messaging application; and
   a server system coupled to the network and having a processor coupled to a memory, the processor configured to:
      receive, from the text messaging application of the mobile device and over the network, an initial message;
      upon receipt of the initial message, authenticate the user based on the mobile device, the authentication resulting in identification of a user record corresponding to the user;
      receive, from the mobile device via the text messaging application and over the network, a plurality of booking messages;
      extract, from the initial message and the booking messages, booking data selected from the group consisting of departure airport information, arrival airport information, departure date information, departure time information, passenger count information, and combinations thereof;
      generate, based on the booking data and the user record, one or more quotes;
      transmit, to the mobile device via the text messaging application and over the network, a quote message including the one or more quotes;
      receive, from the mobile device via the text messaging application and over the network, a quote choice message, wherein the quote choice message corresponds to a selected one of the one or more quotes;
      upon receipt of a booking confirmation message from the mobile device via the text messaging application and over the network, book aircraft services corresponding to the booking data and the selected one of the one or more quotes, the booking resulting in a booking record having a booking record identifier; and
      transmit, to the mobile device via the text messaging application and over the network, the booking record identifier.

## Claims

1. A computerized method for quoting and booking aircraft services via a text messaging application of a mobile device associated with a user, the method comprising:
receiving, by a server system, an initial message from the text messaging application of the mobile device;
authenticating, by the server system upon receipt of the initial message, the user based on the mobile device, the authentication resulting in identification of a user record corresponding to the user;
receiving, by the server system from the mobile device via the text messaging application, a plurality of booking messages;
extracting, by the server system from the initial message and the booking messages, booking data selected from the group consisting of departure airport information, arrival airport information, departure date information, departure time information, passenger count information, and combinations thereof;
generating, by the server system and based on the booking data and the user record, one or more quotes;
transmitting, by the server system to the mobile device via the text messaging application, a quote message including the one or more quotes;
receiving, by the server system from the mobile device via the text messaging application, a quote choice message, wherein the quote choice message corresponds to a selected one of the one or more quotes;
upon receipt of a booking confirmation message from the mobile device via the text messaging application, booking, by the server system, aircraft services corresponding to the booking data and the selected one of the one or more quotes, the booking resulting in a booking record having a booking record identifier; and
transmitting, by the server system to the mobile device via the text messaging application, the booking record identifier.

2. The method of claim 1, wherein the user record includes at least one of a booking history and booking preferences.

3. The method of claim 2, further comprising:
identifying, by the server system, one or more departure airport options based on at least one of the booking history, the booking preferences, and a location of the mobile device;
transmitting, from the server system to the mobile device via the text messaging application, a departure airport message, the departure airport message including the one or more departure airport options.

4. The method of claim 2 or claim 3, further comprising:
identifying, by the server system, one or more arrival airport options based on at least one of the booking history and the booking preferences;
transmitting, from the server system to the mobile device via the text messaging application, an arrival airport message, the arrival airport message including the one or more arrival airport options.

5. The method of any one of claims 2 to 4, further comprising:
identifying, by the server system, one or more departure time options based on at least one of the booking history, the booking preferences, and a current time;
transmitting, from the server system to the mobile device via the text messaging application, a departure time message, the departure time message including the one or more departure time options.

6. The method of any one of claims 2 to 5, further comprising:
identifying, by the server system, one or more arrival time options based on at least one of the booking history, the booking preferences, and a current time;
transmitting, from the server system to the mobile device via the text messaging application, an arrival time message, the arrival time message including the one or more arrival time options.

7. The method of any one of claims 2 to 6, further comprising:
identifying, by the server system, one or more passenger count options based on at least one of the booking history and the booking preferences;
transmitting, from the server system to the mobile device via the text messaging application, a passenger count message, the passenger count message including the one or more passenger count options.

8. The method of any one of claims 2 to 7, further comprising:
receiving, by the server system from the mobile device via the text messaging application, one or more booking detail messages;
extracting, by the server system from the one or more booking detail messages, booking detail data selected from the group of passenger name information, pet name information, catering information, ground transport information, passport information, special notes information, and combinations thereof;
updating, by the server system, the booking record based on the booking detail data.

9. The method of claim 8, further comprising:
identifying, by the server system, one or more catering options based on at least one of the booking history, the booking preferences, the departure airport information, the arrival airport information, a location of the mobile device, and a current time;
transmitting, from the server system to the mobile device via the text messaging application, a catering message, the catering message including the one or more catering options.

10. The method of any one of the preceding claims, wherein generating the one or more quotes is further based on at least one of: subscription information associated with the user record; and temporary flight restrictions.

11. The method of any one of the preceding claims, further comprising:
identifying, by the server system, a preferred quote from the one or more quotes, wherein the preferred quote is based on data selected from the group consisting of the departure airport information, the arrival airport information, the passenger count information, pricing information of the one or more quotes, and combinations thereof,
wherein the quote message further includes an indication of the preferred quote.

12. The method of any one of the preceding claims, further comprising:
generating, by the server system, an alternate route option having at least one of different departure airport information, different arrival airport information, different departure date information, and different departure time information; and
transmitting, by the server system to the mobile device via the text messaging application, an alternate route message including the alternate route option,
wherein the alternate route option is optionally based on data selected from the group consisting of traffic patterns, airspace flow programs, temporary flight restrictions, and combinations thereof.

13. A computerized method for updating a booking record via a text messaging application of a mobile device associated with a user, the method comprising:
receiving, by a server system, an initial message from the text messaging application of the mobile device;
authenticating, by the server system upon receipt of the initial message, the user based on mobile device, the authentication resulting in identification of a user record corresponding to the user;
receiving, by the server system from the mobile device via the text messaging application, a booking record message including a booking record identifier;
retrieving, by the server system, a booking record corresponding to the booking record identifier;
receiving, by the server system from the mobile device via the text messaging application, one or more booking detail messages;
extracting, by the server system from the one or more booking detail messages, booking detail data selected from the group of passenger name information, pet name information, catering information, ground transport information, passport information, special notes information, contact information, and combinations thereof;
updating, by the server system, the booking record based on the booking detail data; and
storing, by the server system, the updated booking record.

14. The method of claim 13, wherein the user record includes at least one of a booking history and booking preferences, and/or wherein the booking record includes departure airport information and arrival airport information.

15. The method of any one of the preceding claims, wherein (i) the user record includes at least one of a booking history and booking preferences, and/or (ii) the booking record includes departure airport information and arrival airport information,
the method further comprising:
identifying, by the server system, one or more ground transportation options based on at least one of the booking history, the booking preferences, the departure airport information, the arrival airport information, a location of the mobile device, and a current time;
transmitting, from the server system to the mobile device via the text messaging application, a ground transportation message, the ground transportation message including the one or more ground transportation options.

16. The method of any one of the preceding claims, wherein authenticating the user further comprises:
receiving, by the server system, identification indicia associated with the initial message and associated with the user;
transmitting, by the server system to an authentication server, the identification indicia;
receiving, by the server system from the authentication server, a trust score;
transmitting, by the server system to the mobile device via the text messaging application, an authentication message based on the trust score being lower than a threshold, wherein the authentication message includes a prompt for the user to perform an additional authentication step;
receiving, by the server system from the authentication server, an authentication result based on at least one of the trust score and an outcome of the additional authentication step; and
authenticating, by the server system, the user based on the authentication result.

17. A system for quoting and booking aircraft services, the system comprising:
a mobile device coupled to a network and associated with a user, the mobile device configured to run a text messaging application; and
a server system coupled to the network and having a processor coupled to a memory, the processor configured to:
receive, from the text messaging application of the mobile device and over the network, an initial message;
upon receipt of the initial message, authenticate the user based on the mobile device, the authentication resulting in identification of a user record corresponding to the user;
receive, from the mobile device via the text messaging application and over the network, a plurality of booking messages;
extract, from the initial message and the booking messages, booking data selected from the group consisting of departure airport information, arrival airport information, departure date information, departure time information, passenger count information, and combinations thereof;
generate, based on the booking data and the user record, one or more quotes;
transmit, to the mobile device via the text messaging application and over the network, a quote message including the one or more quotes;
receive, from the mobile device via the text messaging application and over the network, a quote choice message, wherein the quote choice message corresponds to a selected one of the one or more quotes;
upon receipt of a booking confirmation message from the mobile device via the text messaging application and over the network, book aircraft services corresponding to the booking data and the selected one of the one or more quotes, the booking resulting in a booking record having a booking record identifier; and
transmit, to the mobile device via the text messaging application and over the network, the booking record identifier.
